# EUROPEAN PATENT APPLICATION

(11) **EP 4 286 454 A1**
(43) Date of publication of application: **06.12.2023**
(21) Application number: 21923122.2
(22) Date of filing: 02.12.2021
(51) Int. Cl.: C08J 3/215, C08K 7/02, C08L 1/02, C08L 3/04, C08L 67/00, C08L 67/04, C08L 101/00, C08L 101/16, C08J 5/00, C08J 5/04

(54) **COMPOSITE RESIN MOLDED ARTICLE AND METHOD FOR PRODUCING SAME**

(30) Priority: 27.01.2021 JP 2021011114; 08.03.2021 JP 2021036521
(71) Applicant: Panasonic Intellectual Property Management Co., Ltd., Kadoma-shi, Osaka 571-0057 (JP)
(72) Inventor: OKABE, Ami, Kadoma-shi, Osaka 571-0057 (JP); NAGINO, Toshifumi, Kadoma-shi, Osaka 571-0057 (JP)
(74) Representative: Novagraaf International SA
(86) International application number: PCT/JP2021/044190
(87) International publication number: WO 2022/163117

(57) **Abstract**

A composite resin molded article contains: a base resin; and a plurality of natural fibers dispersed in the base resin, in which a content of the plurality of natural fibers in the composite resin molded article is from 10 mass% to 99 mass% inclusive, based on 100 mass% of the composite resin molded article, at least one of the plurality of natural fibers has a defibrated site at an end portion in a fiber length direction of the at least one of the plurality of natural fibers, the at least one of the plurality of natural fibers has a portion exposed on a surface of the composite resin molded article, and the base resin is a biodegradable plastic containing any one selected from the group consisting of a polyhydroxy acid, a polyhydroxyalkanoate, a polyalkylene dicarboxylate, and a modified starch.

## Description

### TECHNICAL FIELD

The present invention relates to a composite resin molded article having excellent mechanical properties and exhibiting excellent biodegradability in a humid environment.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of that of metal or ceramics. Therefore, general-purpose plastics are often used as materials of various daily commodities such as bags, various packaging, various containers, and sheets, and as materials for industrial components such as automobile components and electrical components, daily necessities, and miscellaneous goods.

Under such circumstances, the amount of plastic waste after use is increasing year by year, and plastic waste, which is a substance having a property of being hardly decomposed, accumulates in a natural environment and causes pollution problems such as destruction of the natural environment and pollution in the natural environment. In recent years, biodegradable plastics that are decomposed into water and carbon dioxide in the natural environment have been proposed as one of countermeasures to solve such various problems, and expanded use of the biodegradable plastics instead of general-purpose plastics produced using petroleum-based raw materials is expected.

However, biodegradable plastics have disadvantages such as insufficient mechanical strength as compared with general-purpose plastics. Therefore, biodegradable plastics do not have sufficient properties required for materials used for various industrial products including machine products such as automobiles and electric/electronic/information products, and the application range thereof is currently limited.

In addition, the biodegradation rate of the biodegradable plastics is greatly affected by the environment. In an environment with a small number of microorganisms, such as in the ocean, it takes significantly long time to completely decompose the biodegradable plastics, and the properties of biodegradability are not sufficiently utilized.

In order to solve such a problem, a method of applying a decomposition accelerator containing an enzyme or a water-absorbent polymer to biodegradable plastics before disposal of the biodegradable plastics (see, for example, PTL 1), and a resin molded article in which an inorganic filler such as talc having a decomposition promoting effect is previously combined with a biodegradable plastic are disclosed (see, for example, PTL 2).

### Citation List

### Patent Literatures

PTL 1: Unexamined Japanese Patent Publication No. 2013-23643
PTL 2: Unexamined Japanese Patent Publication No. 2017-132967

### SUMMARY OF THE INVENTION

A composite resin molded article according to an aspect of the present invention contains: a base resin; and a plurality of natural fibers dispersed in the base resin, in which based on 100 mass% of the composite resin molded article, a content of the plurality of natural fibers in the composite resin molded article is from 10 mass% to 99 mass% inclusive, at least one of the plurality of natural fibers has a defibrated site at an end portion in a fiber length direction of the at least one of the plurality of natural fibers, the at least one of the plurality of natural fibers has a portion exposed on a surface of the composite resin molded article, and the base resin is a biodegradable plastic containing any one selected from the group consisting of a polyhydroxy acid, a polyhydroxyalkanoate, a polyalkylene dicarboxylate, and a modified starch.

A method for producing a composite resin molded article according to an aspect of the present invention includes: preparing a base resin and a natural fiber; and melt-kneading the natural fiber together with the base resin, wherein the natural fiber is defibrated from an end portion in a fiber length direction of the natural fiber to expand a specific surface area of the end portion.

### BRIEF DESCRIPTION OF THE DRAWINGS

Fig. 1 is a schematic cross-sectional view of a composite resin molded article according to a first exemplary embodiment.
Fig. 2 is a schematic view of a natural fiber that is a constituent member of the composite resin molded article according to the first exemplary embodiment.
Fig. 3 is a schematic diagram of a production process for the composite resin molded article according to the first exemplary embodiment.
Fig. 4 is a scanning electron microscope image of a surface of the composite resin molded article according to the first exemplary embodiment.
Fig. 5 is a table showing configurations and measurement results of composite resin molded articles in examples and comparative examples in the exemplary embodiment.

### DESCRIPTION OF EMBODIMENT

In PTL 1, a process of treating biodegradable plastics before disposal is required, and there is a problem that the decomposition rate of the biodegradable plastics depends on the shape of the molded article.

In PTL 2, an inorganic filler having a specific gravity larger than that of a single resin is combined with a resin, and thus there is a problem that the specific gravity of the composite resin molded article increases.

An aspect of the present invention is to solve the above-described conventional problems, and an object of the present invention is to provide a composite resin molded article that does not require a pretreatment at the time of disposal and promotes biodegradation in the ocean and the soil.

A composite resin molded article according to a first aspect contains: a base resin; and a plurality of natural fibers dispersed in the base resin, in which based on 100 mass% of the composite resin molded article, a content of the plurality of natural fibers in the composite resin molded article is from 10 mass% to 99 mass% inclusive, at least one of the plurality of natural fibers has a defibrated site at an end portion in a fiber length direction of the at least one of the plurality of natural fibers, the at least one of the plurality of natural fibers has a portion exposed on a surface of the composite resin molded article, and the base resin is a biodegradable plastic containing any one selected from the group consisting of a polyhydroxy acid, a polyhydroxyalkanoate, a polyalkylene dicarboxylate, and a modified starch.

In the composite resin molded article according to a second aspect, in the first aspect, the composite resin molded article may have a water absorption percentage, as measured by a method defined in JIS K7209: 2000, of more than or equal to 5%.

In the composite resin molded article according to a third aspect, in the first or second aspect, the plurality of natural fibers in the composite resin molded article need not be hydrophobized.

In the composite resin molded article according to a fourth aspect, in any one of the first to third aspects, the composite resin molded article includes: a surface layer; and an inner layer located on an inner side of the surface layer, and a concentration of the plurality of natural fibers in the surface layer may be higher than a concentration of the plurality of natural fibers in the inner layer.

In the composite resin molded article according to a fifth aspect, in any one of the first to fourth aspects, the plurality of natural fibers may be celluloses.

A method for producing a composite resin molded article according to a sixth aspect includes: preparing a base resin and a natural fiber; and melt-kneading the natural fiber together with the base resin, wherein the natural fiber is defibrated from an end portion in a fiber length direction of the natural fiber to expand a specific surface area of the end portion.

In the method according to a seventh aspect, in the sixth aspect, in the melt-kneading, a water absorption amount of the composite resin molded article in a humid environment is increased by drying the natural fiber to have a moisture percentage of less than or equal to 5% and kneading the natural fiber in the base resin.

The composite resin molded article according to an aspect of the present invention can realize a composite resin molded article having high biodegradability and a high proportion of biomass in raw materials in addition to a high elastic modulus as compared with a single resin.

Hereinafter, a composite resin molded article according to an exemplary embodiment and a method of manufacturing the same will be described with reference to the accompanying drawings. Note that, in the following description, the same components are denoted by the same reference marks, and the description thereof is appropriately omitted.

### (First exemplary embodiment)

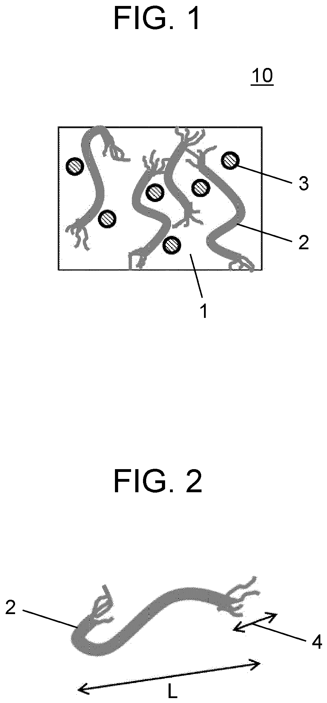

Fig. 1 is a schematic cross-sectional view of composite resin molded article 10 according to a first exemplary embodiment. Fig. 2 is a schematic view of natural fiber 2 that is a constituent member of composite resin molded article 10 according to the first exemplary embodiment.

Composite resin molded article 10 according to the first exemplary embodiment is formed of a melt-kneaded product containing base resin 1, natural fiber 2, and as necessary, additive 3. In composite resin molded article 10, as illustrated in the schematic cross-sectional view of Fig. 1, natural fiber 2 and additive 3 are dispersed in base resin 1.

At least one natural fiber 2 is exposed on the surface of composite resin molded article 10.

Further, as illustrated in the schematic view of natural fiber 2 in Fig. 2, providing defibrated site 4 at the end portion of natural fiber 2 increases the specific surface area of defibrated site 4, and increases the number of contact points between natural fibers 2. As a result, water can be absorbed into the inside of composite resin molded article 10 via the contact points between natural fibers 2 in a humid environment.

According to this composite resin molded article 10, at least one natural fiber 2 is exposed on the surface of the composite resin molded article and natural fibers 2 have a contact point with each other, and therefore, a composite resin molded article having a high elastic modulus, high water absorbency, and excellent biodegradability in a humid environment can be realized.

Hereinafter, each member constituting the composite resin molded article will be described.

### <Base resin>

In the present exemplary embodiment, base resin 1 is preferably a biodegradable plastic containing any of a polyhydroxy acid, a polyhydroxyalkanoate, a polyalkylene dicarboxylate, and a modified starch. Further, in order to ensure good moldability, a thermoplastic resin is preferable, and the above resins may be used alone or in combination of two or more thereof. Note that base resin 1 is not limited to the above materials as long as it has biodegradability.

In the present exemplary embodiment, the term "biodegradable plastic" refers to "resin that has a function similar to that of a conventional petroleum-derived resin at the time of use, and is finally decomposed into water and carbon dioxide by microorganisms in the soil and the ocean in nature after use". Specific examples of the biodegradable plastic include polyhydroxyalkanoates such as polyhydroxybutyrate and polyhydroxyvalerate; polyhydroxy acids such as polylactic acid, polyglycolic acid, and polycaprolactone; polyester-based resins including polyalkylene dicarboxylates such as polybutylene adipate terephthalate, polyethylene succinate, and polybutylene succinate; and modified starches. Examples of the polyester-based resin include, in addition to a homopolymer of a polyester-based monomer, a copolymer of a polyester-based monomer, such as poly(3-hydroxybutyrate-co-3-hydroxyvalerate), and a copolymer of a polyester-based monomer and another copolymerizable monomer. These polyester-based resins may be used alone or in combination of two or more thereof.

### <Additive>

Next, additive 3 will be described. Additive 3 may be used as necessary for the purpose of, for example, improving the affinity between base resin 1 and natural fiber 2.

### <Natural fiber>

Next, natural fiber 2 will be described. Natural fiber 2 (hereinafter, may be simply referred to as "fiber") contained in the composite resin molded article in the present exemplary embodiment is used for the main first purpose of, in the composite resin molded article, increasing the area of base resin 1 that can come into contact with microorganisms due to water absorption and expansion in the soil and the ocean to promote biodegradation without imposing a load on the environment when the composite resin molded article is disposed after use. For this purpose, natural fiber 2 preferably has high water absorbency, and pulp, cellulose, cellulose nanofibers, lignocellulose, lignocellulose nanofibers, cotton, silk, hemp, or the like is preferable.

The second purpose of adding natural fiber 2 is to improve mechanical properties and to improve dimensional stability by decreasing the linear expansion coefficient. For this purpose, natural fiber 2 preferably has a higher elastic modulus than base resin 1. Specific examples thereof include pulp, cellulose, cellulose nanofibers, lignocellulose, lignocellulose nanofibers, cotton, silk, wool, and hemp. Further, among them, celluloses are particularly preferable from the viewpoint of availability, high elastic modulus, and low linear expansion coefficient. Note that natural fiber 2 is not limited to the above materials as long as it can improve mechanical properties and has water absorbency.

The content of natural fiber 2 is preferably from 10 mass% to 99 mass% inclusive, based on 100 mass% of the composite resin molded article. When the content of natural fiber 2 is less than 10 mass%, natural fibers 2 are less likely to have a contact point with each other in the composite resin molded article, and thus sufficient water absorbency is not attained. On the other hand, when the content of natural fiber 2 is more than 99 mass%, the proportion of base resin 1 decreases, so that the effect of bonding natural fibers 2 to each other is lost and moldability is thus deteriorated.

The form of natural fiber 2 in the composite resin molded article will be described. When the bonding interface between natural fiber 2 and base resin 1 is large, the area of base resin 1 that can come into contact with microorganisms during water absorption and expansion of natural fiber 2 increases, and therefore the specific surface area of natural fiber 2 is preferably large. On the other hand, in order to improve the water absorbency of the composite resin molded article, natural fiber 2 is preferably exposed on the surface of the composite resin molded article. Since natural fiber 2 is exposed on the surface of the composite resin molded article, water is absorbed from an exposed portion, and water is absorbed into the inside of the composite resin molded article by a capillary phenomenon of fibers. Natural fiber 2 exposed on the surface of the composite resin molded article has higher water absorbency as the specific surface area is smaller. This is because when the specific surface area of natural fiber 2 exposed on the surface is large, water repellency is enhanced by the effect of fine irregularities.

A structure satisfying the above can be obtained by adjusting the molding conditions to increase the shrinkage rate during molding of the composite resin molded article, and providing defibrated site 4 at the end portion of natural fiber 2 as illustrated in Fig. 2. That is, natural fiber 2 is easily exposed on the surface of the composite resin molded article by increasing the shrinkage rate during molding. Further, the central portion of natural fiber 2, which has a small specific surface area and is not defibrated, is less entangled with base resin 1 and is easily exposed to the surface of the composite resin molded article depending on the molding conditions. On the other hand, the tip portion of defibrated natural fiber 2 is highly entangled with base resin 1, and enters the inside together with base resin 1. As a result, it is possible to obtain a composite resin molded article in which the central portion not including both end portions of natural fiber 2 is exposed to the surface.

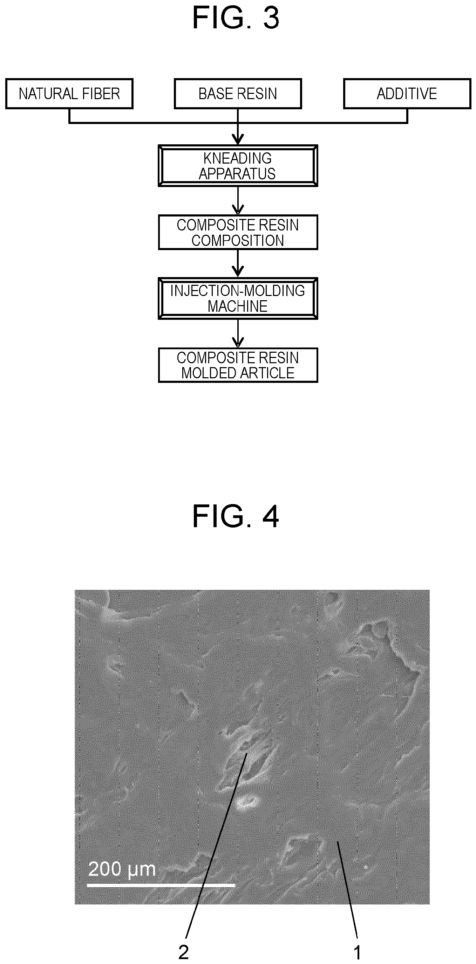

Fig. 4 shows a scanning electron microscope (SEM) image of the surface of the composite resin molded article in the exemplary embodiment. As can be seen from Fig. 4, only the central portion of natural fiber 2 is exposed on the surface. Tip defibrated site 4 is preferably from 5% to 50% inclusive of fiber length L of entire natural fiber 2. When the length of defibrated site 4 is less than 5% of total fiber length L, the elastic modulus is not improved because the specific surface area is small, and when the length of defibrated site 4 is more than 50%, defibrated site 4 having a high aspect ratio is exposed on the surface of the composite resin molded article, so that water absorbency is deteriorated.

Next, the state of existence of natural fiber 2 in the composite resin molded article will be described. The composite resin molded article includes: a surface layer; and an inner layer located on an inner side of the surface layer. As described above, natural fiber 2 can be segregated in the vicinity of the surface of the composite resin molded article depending on the molding conditions. As a result, natural fiber 2 is more present in the surface layer than in the inner layer of the composite resin molded article. In addition, when viewed as a molded article, when a large amount of natural fiber 2 is present on the surface layer of the composite resin molded article, the elastic modulus of the outer side of the molded article is high, so that the rigidity of the entire molded article increases. The structure in which natural fiber 2 is segregated in the vicinity of the surface of the molded article also leads to improvement in rigidity accordingly. The segregation of natural fiber 2 in the vicinity of the surface of the molded article can be evaluated by SEM observation or the like of the cross section of the composite resin molded article.

Next, properties of natural fiber 2 will be described. The types of base resin 1 and natural fiber 2 are as described above, but when natural fiber 2 is too soft, that is, has a small elastic modulus, with respect to base resin 1, the composite resin molded article has a small elastic modulus as a whole, resulting in a decrease in strength. On the other hand, when natural fiber 2 is too hard, that is, has a large elastic modulus, with respect to base resin 1, shock waves generated at the time of impact are not propagated, and the impact is absorbed at the interface between base resin 1 and natural fiber 2. For this reason, cracking and crazing are likely to occur in the vicinity of the interface, resulting in deterioration of impact strength. Therefore, in the relationship between the elastic modulus of base resin 1 and the elastic modulus of natural fiber 2, the elastic modulus of natural fiber 2 is higher, and the difference between the elastic moduli is preferably as small as possible. The optimum relationship is calculated from simulation results, and the difference in elastic modulus between base resin 1 and natural fiber 2 is preferably within 20 GPa.

Further, these natural fibers 2 may be subjected to a surface treatment for the purpose of, for example, improving adhesion to base resin 1 or dispersibility in the composite resin molded article, but when the water absorbency of natural fibers 2 is impaired by the surface treatment, it is preferable not to perform the surface treatment in advance.

### <Method of producing composite resin molded article>

Next, a method of producing a composite resin molded article will be described. Fig. 3 is a flowchart illustrating a production process of the composite resin molded article in the present exemplary embodiment.
(1) Base resin 1, natural fiber 2, and additive 3 are charged into a melt-kneading apparatus, and are melt-kneaded in the apparatus. As a result, base resin 1 is melted, and natural fiber 2 and additive 3 are dispersed in molten base resin 1. At the same time, the shearing action of the apparatus promotes defibration of aggregates of natural fibers 2, and natural fibers 2 can be finely dispersed in base resin 1. At this time, the end portion of natural fiber 2 is defibrated to form defibrated site 4.

Conventionally, when fibers are combined with a resin, fibers that have been defibrated in advance by a pretreatment such as wet dispersion have been used. However, when the natural fibers are defibrated in a solvent used in wet dispersion, the fibers swells due to the solvent. Therefore, in order for the natural fibers to sufficiently absorb water and expand in the composite resin molded article, the solvent in the natural fibers needs to be dried before being kneaded with the base resin. Further, in the defibration by wet dispersion, the fibers are easier to be defibrated than to be defibrated in the molten base resin, so that it is difficult to defibrate only the end portion, and the entire natural fiber is defibrated. In addition, there is a problem that the number of processes increases and productivity deteriorates by combining the pretreatment.

On the other hand, in the production process of a composite resin molded article in the present exemplary embodiment, a melt-kneading treatment (all-dry method) is performed together with base resin 1, additive 3 functioning as a dispersant, and the like without performing a pretreatment by wet dispersion for the purpose of defibration of natural fiber 2. In this method, since the wet dispersion treatment of the natural fiber is not performed, swelling of natural fiber 2 in the production process is suppressed, and the hygroscopic expansion coefficient of natural fiber 2 in base resin 1 of the composite resin molded article can be improved. In addition, the expansion coefficient at the time of water absorption in base resin 1 can be further improved by drying natural fiber 2 in advance or during kneading to adjust the moisture percentage to less than or equal to 5%. Since natural fiber 2 has defibrated site 4 as described above, fibers have many contact points inside the composite resin molded article, and water can be absorbed into the inside of the composite resin molded article via the contact points between the fibers.

In order to prepare natural fiber 2 of the present exemplary embodiment by the all-dry method, it is preferable to apply high shear stress during kneading. Specific examples of the kneading method include a kneading method using a single screw kneader, a twin screw kneader, a roll kneader, a Banbury mixer, and a combination thereof. From the viewpoint of easy application of high shear and high mass productivity, a continuous twin screw kneader and a continuous roll kneader are particularly preferable. A kneading method other than the above may be used as long as high shear stress can be applied.

(2) The composite resin composition extruded from the melt-kneading apparatus is prepared in the form of a pellet through a cutting process such as a pelletizer. As a method of pelletizing, there are an air hot cut method, an underwater hot cut method, a strand cut method, and the like as a method performed immediately after melting of the resin. Alternatively, there is also a pulverization method in which a molded article or a sheet is once molded and then pulverized and cut.

(3) An injection-molded article as a composite resin molded article can be prepared by injection-molding the pellet. Since natural fiber 2 in the pellet is mixed with base resin 1 as described above, an injection-molded article excellent in elastic modulus, impact resistance, and appearance can be obtained.

Hereinafter, examples and comparative examples in experiments performed by the inventors will be described.

### (Example 1)

In Example 1, a cellulose composite polylactic acid resin molded article was produced by the following production method.

Softwood pulp (product name: NBKP Celgar, manufactured by Mitsubishi Paper Mills Limited) was used as a starting material for the natural fiber. Polylactic acid (trade name: TE-2000, manufactured by Unitika Ltd.) as the base resin and the softwood pulp which had been dried in advance and adjusted to have a moisture percentage of less than or equal to 5% were weighed so as to have a weight ratio of 50 : 50, and dry-blended.

Thereafter, the mixture was melt-kneaded with a twin screw kneader (KRC kneader, manufactured by Kurimoto, Ltd.). A screw was of a medium shear type. The conditions of the melt-kneading were a temperature of the base resin of 200°C and a rotation speed of 50 min⁻¹. The composite resin composition discharged from the twin screw kneader was hot-cut to prepare cellulose composite polylactic acid resin pellets.

A test piece of a cellulose composite polylactic acid resin molded article was prepared using the prepared cellulose composite polylactic acid pellets by an injection-molding machine (180AD, manufactured by The Japan Steel Works, Ltd.). The preparation conditions of the test piece were a base resin temperature of 200°C, a mold temperature of 30°C, an injection speed of 100 mm/s, and a holding pressure of 100 Pa. The shape of the test piece was changed according to the evaluation items described below, and a No. 1 size dumbbell was prepared for measuring the elastic modulus. The obtained test piece of the cellulose composite polylactic acid resin molded article was evaluated by the following methods.

### (Fiber end portion defibration)

The obtained cellulose composite polylactic acid resin pellets were immersed in a xylene solvent to dissolve polylactic acid, and the shape of the remained cellulose fibers was observed with a scanning electron microscope (SEM). As a result, the end portions of the fibers were in a defibrated state.

### (Elastic modulus of composite resin molded article)

A tensile test was performed using the obtained No. 1 dumbbell-shaped test piece. Here, as a method for evaluating the elastic modulus, a sample having a numerical value of less than 1.8 GPa was evaluated as "C", a sample having a numerical value of more than or equal to 1.8 GPa and less than 2.1 GPa was evaluated as "B", and a sample having a numerical value of more than or equal to 2.1 GPa was evaluated as "A".

The test piece had an elastic modulus of more than or equal to 2.1 GPa, and the evaluation thereof was "A".

### (Evaluation of water absorption percentage of composite resin molded article)

Using the obtained No. 1 dumbbell-shaped test piece, the water absorption percentage was measured by a method in accordance with JIS K7209: 2000. Specifically, the test piece was dried in a dryer at 50°C for 24 hours, and the weight of the test piece was measured. Then, the test piece was immersed in distilled water at 23°C for 168 hours, the moisture on the surface was then wiped off, and the weight of the test piece was measured. As a method for evaluating the water absorption percentage, a sample having a numerical value of more than or equal to 5% was evaluated as "A", and a sample having a numerical value of less than 5% was evaluated as "C".

The test piece had a water absorption percentage of 5.2%, and the evaluation thereof was "A".

### (Evaluation of seawater biodegradability of composite resin molded article)

A seawater biodegradation test was performed using a bar-shaped test piece formed of the obtained cellulose composite resin molded article. For the seawater biodegradability, 50 mL of seawater was put into a plastic container, a bar-shaped test piece, which has a height of 20 mm, a width of 10 mm, and a thickness of 4 mm and whose weight had been measured in advance, was immersed in the seawater, the water temperature was maintained at 27°C, and the weight loss after 4 months was evaluated. Note that the seawater was collected from a coastal area of Nankoku City, Kochi Prefecture. As a method for evaluating the biodegradation percentage, a sample having a numerical value of more than or equal to 5% was evaluated as "A", and a sample having a numerical value of less than 5% was evaluated as "C".

The test piece had a biodegradation percentage of 5.5%, and the evaluation thereof was " A".

### (Comparative Example 1)

In Comparative Example 1, a cellulose composite polypropylene resin pellet and a composite resin molded article were prepared in the same material conditions and process conditions as in Example 1 except that the base resin was changed to polypropylene (trade name: BC03C, manufactured by Japan Polypropylene Corporation). The evaluation was performed in the same manner as in Example 1.

### (Comparative Example 2)

In Comparative Example 2, a cellulose composite polypropylene resin pellet and a composite resin molded article were prepared in the same material conditions and process conditions as in Example 1 except that the base resin was changed to polypropylene, and the weight ratio of polypropylene to softwood pulp was changed to 85 : 15. The evaluation was performed in the same manner as in Example 1.

### (Comparative Example 3)

In Comparative Example 3, a polylactic acid resin molded article was prepared in the same process conditions as in Example 1 except that a polylactic acid resin was used as a raw material without combining the resin with natural fibers. The evaluation was performed in the same manner as in Example 1.

### (Comparative Example 4)

In Comparative Example 4, a polypropylene resin molded article was prepared in the same process conditions as in Example 1 except that a polypropylene resin was used as a raw material without combining the resin with natural fibers. The evaluation was performed in the same manner as in Example 1.

### (Comparative Example 5)

In Comparative Example 5, the base resin was changed to polypropylene, and the weight ratio of polypropylene to softwood pulp was changed to 85 : 15. A layer made of only a resin was formed as the outer layer of the composite resin molded article by two-layer molding. A cellulose composite polypropylene pellet and a composite resin molded article were prepared in the same material conditions and process conditions as in Example 1 except for the above conditions. The evaluation was performed in the same manner as in Example 1.

### (Comparative Example 6)

In Comparative Example 6, the base resin was changed to polypropylene, and the weight ratio of polypropylene to softwood pulp was changed to 85 : 15. The mold temperature during molding was set to 120°C, and the resin was slowly cooled so that the fibers and the additive flowed inward. A cellulose composite polypropylene pellet and a composite resin molded article were prepared in the same material conditions and process conditions as in Example 1 except for the above conditions. The evaluation was performed in the same manner as in Example 1.

### (Comparative Example 7)

In Comparative Example 7, PET fibers were used instead of natural fibers, and the base resin was changed to polypropylene. The weight ratio of PET fibers to polypropylene was 15 : 85. A PET fiber composite polypropylene resin molded article was prepared in the same process conditions as in Example 1 except for the above conditions. The evaluation was performed in the same manner as in Example 1.

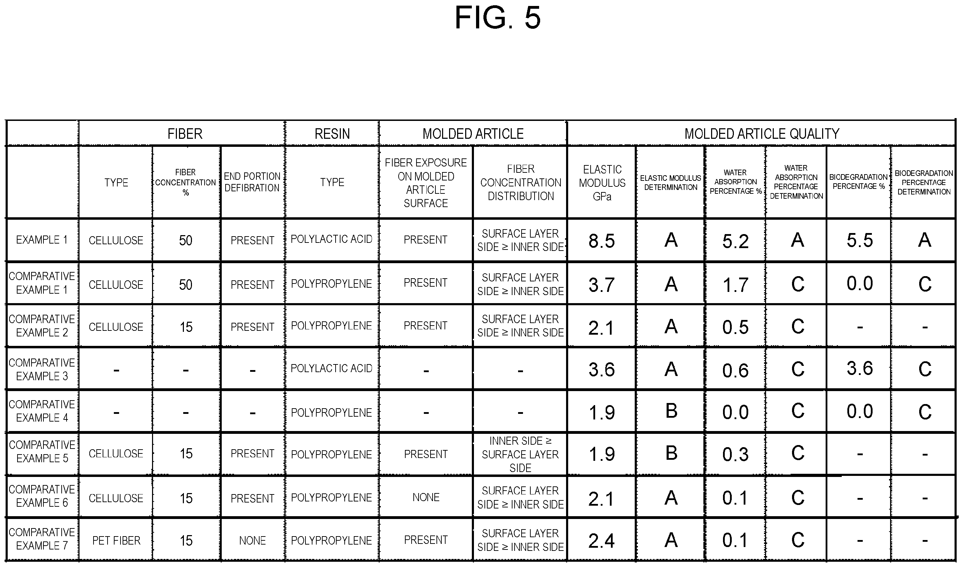

Fig. 5 shows the configurations and measurement results of the composite resin molded articles in Example 1 and Comparative Examples 1 to 7.

As is apparent from Fig. 5, in Example 1 in which cellulose fibers were combined with polylactic acid, the elastic modulus was more than or equal to 2.1 GPa, which was high, and the water absorption percentage and the biodegradation percentage were also improved by the water absorbency of natural fibers, as compared with the polylactic acid resin molded article of Comparative Example 3. It has been confirmed that a composite resin having a high elastic modulus and high biodegradability can be obtained when natural fibers are combined with a resin, the fibers are defibrated at their end portions and are not hydrophobized in advance, the fibers are exposed on the surface of the composite resin molded article, the concentration distribution of the natural fibers is higher on the surface layer side, and the water absorption percentage of the molded article is high.

In Comparative Example 1 in which polypropylene was used as the base resin, the water absorption percentage of the composite resin molded article was less than 5% because the water absorption percentage of polypropylene resin was low, and the biodegradation percentage was also "C" because polypropylene had no biodegradability.

In Comparative Example 2 in which the weight ratio of polypropylene resin to softwood pulp was 85 : 15, the fiber content was decreased, and thus the elastic modulus and the water absorption percentage were decreased as compared with Comparative Example 1.

In Comparative Example 3 in which molding was performed using only polylactic acid resin, no natural fiber was contained, and thus the elastic modulus was decreased as compared with Example 1. The water absorption percentage was as low as 0.6%, and the biodegradation percentage was "C".

In Comparative Example 4 in which molding was performed using only polypropylene resin, no natural fiber was contained, and thus the elastic modulus was decreased to less than 2.1 GPa, which was "B", as compared with Comparative Examples 1 and 2. The water absorption percentage was also decreased to 0.0%.

In Comparative Example 5 in which the mold temperature during molding was 120°C and the resin was slowly cooled so that the fibers and the additive flowed inward, the abundance ratio of the fibers in the molded article was such that the inner side ≥ the surface layer side. As a result, the elastic modulus was decreased to less than 2.1 GPa, which was "B", as compared with Comparative Example 2. The water absorption percentage was also decreased to 0.3%.

In Comparative Example 6 in which a layer made of only a resin was formed as the outer layer of the composite resin molded article by two-layer molding, fibers were not exposed on the surface of the molded article. As a result, the water absorption percentage at the surface of the composite resin molded article was decreased, and the water absorption percentage of the composite resin molded article was decreased to 0.1%.

In Comparative Example 7 in which PET fibers were used instead of natural fibers, the water absorption percentage of the fibers themselves was low, and the water absorption percentage of the molded article was decreased to 0.1%.

From the above evaluation, it has been confirmed that a composite resin molded article having a high elastic modulus and high biodegradability can be obtained when natural fibers having water absorbency and a biodegradable plastic are used, the fibers are defibrated at their end portions and are not hydrophobized in advance, the central part of the fibers is exposed on the surface of the composite resin molded article, the concentration distribution of the natural fibers is higher on the surface layer side, and the water absorption percentage of the composite resin molded article is high.

Note that the present disclosure includes appropriate combination of any exemplary embodiment and/or example among the various exemplary embodiments and/or examples described above, and effects of the respective exemplary embodiments and/or examples can be achieved.

### INDUSTRIAL APPLICABILITY

With the composite resin molded article according to the present invention, it is possible to provide a molded article having mechanical strength and biodegradability superior to those of conventional biodegradable plastics. Since the properties of the base resin can be improved by the present invention, the composite resin molded article according to the present invention can be used as an alternative to petroleum-derived general-purpose plastics. Therefore, the environmental load of various industrial products or daily commodities made of petroleum-derived general-purpose plastics can be significantly reduced. Further, the composite resin molded article according to the present invention can be used for packaging materials, daily necessities, housings for household electric appliances, building materials, and the like.

### REFERENCE MARKS IN THE DRAWINGS

- 1: base resin
- 2: natural fiber
- 3: additive
- 4: defibrated site
- 10: composite resin molded article

## Claims

1. A composite resin molded article comprising:
a base resin; and
a plurality of natural fibers dispersed in the base resin,
wherein,
based on 100 mass% of the composite resin molded article, a content of the plurality of natural fibers in the composite resin molded article is from 10 mass% to 99 mass% inclusive,
at least one of the plurality of natural fibers has a defibrated site at an end portion in a fiber length direction of the at least one of the plurality of natural fibers,
the at least one of the plurality of natural fibers has a portion exposed on a surface of the composite resin molded article, and
the base resin is a biodegradable plastic containing any one selected from the group consisting of a polyhydroxy acid, a polyhydroxyalkanoate, a polyalkylene dicarboxylate, and a modified starch.

2. The composite resin molded article according to Claim 1, wherein the composite resin molded article has a water absorption percentage, as measured by a method defined in JIS K7209: 2000, of more than or equal to 5%.

3. The composite resin molded article according to Claim 1 or 2, wherein the plurality of natural fibers in the composite resin molded article are not hydrophobized.

4. The composite resin molded article according to any one of Claims 1 to 3, wherein
the composite resin molded article includes: a surface layer; and an inner layer located on an inner side of the surface layer, and
a concentration of the plurality of natural fibers in the surface layer is higher than a concentration of the plurality of natural fibers in the inner layer.

5. The composite resin molded article according to any one of Claims 1 to 4, wherein the plurality of natural fibers are celluloses.

6. A method for producing a composite resin molded article, the method comprising:
preparing a base resin and a natural fiber; and
melt-kneading the natural fiber together with the base resin, wherein the natural fiber is defibrated from an end portion in a fiber length direction of the natural fiber to expand a specific surface area of the end portion.

7. The method according to Claim 6, wherein, in the melt-kneading, a water absorption amount of the composite resin molded article in a humid environment is increased by drying the natural fiber to have a moisture percentage of less than or equal to 5% and kneading the natural fiber in the base resin.
